# EUROPEAN PATENT APPLICATION

(11) **EP 1 176 519 A2**
(43) Date of publication of application: **30.01.2002**
(21) Application number: 01116870.5
(22) Date of filing: 10.07.2001
(51) Int. Cl.: G06F 17/30

(54) **Web address beacon for allowing fast and convenient web navigation**

(30) Priority: 17.07.2000 US 617363
(71) Applicant: Hewlett-Packard Company, A Delaware Corporation, Palo Alto, CA 94304 (US)
(72) Inventor: Morgan, Jeffrey A., Cupertino, CA 95014 (US); Frid, Marcos Klein, San Carlos, CA 94070 (US); Schettino, John Charles Jr., San Jose, CA 95129 (US); Tourrilhes, Jean, Mountain View, CA 94040 (US); Serra, Bill, Palo Alto, CA 94036 (US)
(74) Representative: Schoppe, Fritz, Dipl.-Ing.

(57) **Abstract**

A web navigation system is described. The web navigation system includes a beacon that stores a web address of a particular web page that contains information about a physical object. The beacon is located or placed adjacent to the physical object. The beacon transmits signals containing the web address. The web navigation system also includes a beacon receiver physically separated from the beacon to receive, when within the transmission range of the beacon, the beacon signals transmitted from the beacon and decode the web address from the beacon signals. A web access module is coupled to the beacon receiver and external Internet to access the web page using the web address.

## Description

### BACKGROUND OF THE INVENTION

### 1. Field of the Invention

The present invention pertains to Internet and World Wide Web ("WWW"). More particularly, this invention relates to a web address beacon placed adjacent to a physical entity that transmits the web address of a web page for the physical entity such that fast and convenient web navigation is achieved.

### 2. Description of the Related Art

As we know, the world we live in is a physical world that is formed by physical entities such as people, places, and things (or objects). For example, a bookstore is a place. So is a museum, an exhibition hall, a conference room, or a home. A book in a bookstore, a painting in a museum or in an exhibition hall is a thing. Likewise, a TV in a house is a thing. A bus stop can be referred to as a place. These are some examples of physical entities.

With the rapid growth of the Internet and widespread use of World Wide Web (WWW), more and more physical entities have their own web pages. This form of representation for the physical entities is typically referred to as non-physical or virtual representation. In this case, each physical entity can have one or more web pages. In addition, each web page can also represent one or more physical entities. These web pages use text, audio, video, and/or images to describe or illustrate their respective physical entities. The web pages may also provide services (e.g., e-commerce) for their physical entities. A person can simply go to the web pages of a physical entity to get information about the physical entity, or to conduct business transaction with the physical entity (i.e., on-line transaction or e-commerce). These web pages form the virtual world or cyberspace of the physical world.

The web representation allows the physical entities to become more useful, convenient, and accessible. For example, instead of physically posting, at a particular bus stop, the arrival and departure schedules of various buses at that particular bus stop, the bus stop is equipped with its own web page which lists all the arrival and departure times so customers can access the information anywhere and anytime so long as they have the web address of the web page. The web page is also automatically updated in real time, thus avoiding the need for the employees of the bus company to physically post any change of the posted schedule. This provides people with accurate information cost-effectively and efficiently. As a further example, a retail store may have a web page that describes the merchandise it offers, directions to the store, and store hours. The web page might also provide easy email access for asking questions. Some stores might offer on-line ordering through their web pages.

However, although a physical entity in real world may have its web-based representation, the two are not tightly connected. This means that there is no means for bridging the two worlds together. In other words, the prior art structure does not provide means for linking people who are accessing a physical entity to its web page. For a person to find the right web page of a physical entity, the person either has to memorize the web address of the web page, or has to find the web page through searching and browsing the Web. This causes difficulty and inconvenience for the users to access those web pages. The inconvenience has increasingly become obvious because the Web has now grown to contain millions of millions of web sites and/or web pages. In addition, desired web pages are typically nested within a web site. The address of a web site is relatively short and easy to remember. For example, the address of the web site of Hewlett-Packard Company is "www.hp.com" while the address of the web site for Microsoft Corporation is "www.microsoft.com". However, this is not the case for the address of a specific web page within a web site. For example, the address of the web page for a particular turtle neck sweater on the Gap Inc's web site may be
"www.gap.com/onlinestore/gapstore/product.asp?wpid=12977&sid=7HWUHN GFFSS12H0B00AKH2QFP8FE1BP4&wdid=214". This is very hard to remember and use. The reason that the address is so long and confusion is that these web pages are transient and can be changed on a regular basis because physical inventory changes rapidly.

This problem is also amplified by the fact that more and more people can access the Web through their mobile devices. As we know, with the increased availability of highly functional portable or mobile devices and deployment of wireless networking options, more and more people are always connected to the Web. Wherever they are, they have ready access to the virtual world through their mobile browser.

Thus, there exists a need to provide a dynamic, interactive, and easy-to-locate web representation for a physical entity that can bridge the virtual and physical worlds.

### SUMMARY OF THE INVENTION

One feature of the present invention is to allow easy and quick web navigation.

Another feature of the present invention is to associate virtual world with real physical world.

A further feature of the present invention is to associate a web page with a physical entity such that when the physical entity attracts attention, the associated web page is quickly and automatically located without the need for user browsing.

A still further feature of the present invention is to allow easy and quick web navigation by using beacons.

A web navigation system includes a beacon that stores or contains a web address of a particular web page that contains information about a physical object. The beacon and the physical object are located adjacent to each other. The beacon transmits signals containing the web address. The web navigation system also includes a beacon receiver physically separated from the beacon to receive, when within the transmission range of the beacon, the beacon signals transmitted from the beacon and to decode the web address from the beacon signals. A web access module is coupled to the beacon receiver and external Internet to access the web page using the web address.

A system for linking a web page to a physical entity includes a beacon that stores a web address of the web page which contains information about the physical entity and a client system physically separated from the beacon. The beacon is placed adjacent to the physical entity and transmits beacon signals containing the web address. The client system further includes a beacon receiver that receives, when within transmission range of the beacon, the beacon signals and decodes the web address from the beacon signals. A web access module is coupled to the beacon receiver and external Internet to access the web page using the web address such that when the physical entity attracts attention, the web page is quickly and automatically located without the need for user browsing.

Other features and advantages of the present invention will become apparent from the following detailed description, taken in conjunction with the accompanying drawings, illustrating by way of example the principles of the invention.

### BRIEF DESCRIPTION OF THE DRAWINGS

Figure 1 schematically shows a web navigation system that implements one embodiment of the present invention, wherein the web navigation system includes a URL beacon and a client system which includes a beacon receiver.

Figure 2 shows one embodiment of the client system of Figure 1.

Figure 3 shows another embodiment of the client system of Figure 1.

Figure 4 shows the structure of the beacon receiver of Figure 1.

### DETAILED DESCRIPTION OF THE INVENTION

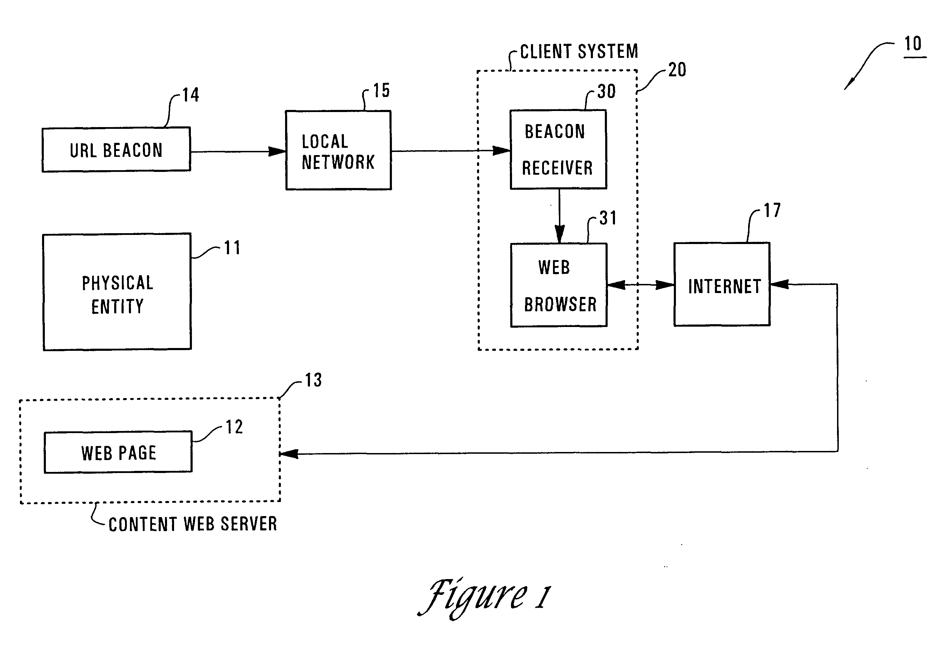

Figure 1 shows a web navigation system 10 that implements one embodiment of the present invention. The web navigation system 10 bridges virtual and physical worlds such that easy web navigation is achieved. This means that the web navigation system 10 provides a dynamic, interactive, and easy-to-locate web representation for a physical entity 11. The web navigation system 10 achieves this by placing a web address beacon (i.e., URL beacon 14) adjacent to the physical entity 11. The beacon 14 broadcasts or transmits beacon signals that contain the web address of a web page (i.e., the web page 12) of the physical entity 11. This allows direct access to the web page 12 without the need either to search the Web to find the web page 12, or to remember the web address of the web page 12 beforehand.

As is known, the world we live in is a physical world that is formed by physical entities such as people, places, and things (or objects). Thus, the physical entity 11 can be a person, a place, or a thing/object. This means that the physical entity 11 can be a bookstore, a museum, a conference room, a hotel room, or an item displayed at the bookstore or museum. The physical entity 11 can also be a convention center, a car displayed at the convention center, or the organization that hosts the auto exhibition. Moreover, the physical entity 11 can be a bus terminal or stop.

The physical entity 11 has a web page 12. This means that the physical entity 11 is represented in the virtual world by the web page 12. Alternatively, the physical entity 11 has two or more web pages. Moreover, the web page 12 may represent more than one physical entities.

The web page 12 represents the physical entity 11 in the virtual world. The web page 12 can contain information related to the physical entity 11 it represents. The web page 12 may also include written text, audio, and/or images to describe the physical entity 11. For example, if the physical entity 11 is a car, then the web page 12 can list all the features of the car. It may also include some audio information about the car. Moreover, 2-D or 3-D images may also be included to illustrate the internal structure of the car. The web page 12 may also contain video programs about the car. As a further example, when the physical entity 11 is a bus stop, the web page 12 can contain and display various bus arrival and departure schedules at the bus stop. If the physical entity 11 a person, the web page 12 for the physical entity 11 can contain personal information about the person, such as personal resume. The web page 12 can also contain contact information of the person.

The web page 12 is located within a web server 13 which is part of the web navigation system 10. The web server 13 does not need to be physically located within the physical entity 11. The web server 13 can be physically located anywhere. The web server 13 contains many web pages, including the web page 12. Each of the web pages in the web server 13 has its own unique web address. The web address can also be referred to as URL (Universal Resource Locator) or IP (Internet Protocol) address. The web server 13 can be implemented using any known web server technology.

The web server 13 is connected to the Internet 17. As is known, the Internet 17 is formed by a number of server systems connected together via an interconnect network. This means that the web server 13 is also part of the Internet 17. The web server 13 and all of its web pages can be accessed by a web browser (e.g., the web browser 31) via the Internet 17. This means that the web page 12 is accessed by a user through a web browser via the Internet 17. The browser only needs to send the web address of the web page 12 to the Internet 17 in order to access the web page 12. An open standard communication protocol (e.g., the Hyper Text Transport Protocol (HTTP)) is used for communication through the Internet 17.

To allow for easy, quick, and direct access of the web page 12 without browsing when a user is interested in the physical entity 11, the web navigation system 10 uses the web address beacon 14 (also referred to as URL beacon) to transmit or broadcast the web address of the physical entity 11. The beacon 14 is placed *adjacent to* the physical entity 11. This creates a linkage between the web page 12 and its related physical entity 11, which allows quick, direct, and easy access to the web page 12. In this case, the interested user can readily receive the web address of the web page 12 for the physical entity 11. The user does not need to memorize the web address of the web page 12 beforehand. The user even does not need to know the web address of the web page 12. The user also does not need to browse through the Web to find the web address of the web page 12. As long as the user is in the broadcasting or transmission range of the beacon 14 and has a beacon receiver, the user will have the web address of the web page 12.

Here, the term "*adjacent to"* means that the beacon 14 can be placed or located on, in, or near the physical entity 11. For example, if the physical entity 11 is a small object (e.g., a car or a painting in a museum), the beacon 14 can be placed near or on the object. If the physical entity 11 is a place (e.g., a conference room or museum), the beacon 14 can be placed in the front of the place or inside the place. In essence, the beacon 14 can be treated like a poster.

Throughout this entire specification, including claims and drawings, the term *"beacon"* (or web address beacon) is defined as an electronic device that performs two major functions. One is to store or contain information (in this case, web address and other information) and the other is to transmit electrical signals embedding the stored or contained information.

In one embodiment, information can be programmed and reprogrammed into the web address or URL beacon 14. This allows the beacon 14 to be electronically updated with new information. The beacon 14 can store information volatilely or non-volatilely.

The beacon 14 stores a predetermined amount of data. In one embodiment, the beacon 14 can store 128 bytes of data. In alternative embodiments, the beacon 14 can be longer or shorter than 128 bytes. The web address stored in the beacon 14 can be in various forms. In one embodiment, the web address stored in the beacon 14 is already decoded into the binary form. In another embodiment, the web address stored is in the "name=value" pair form (i.e., the Extensible Markup Language (XML) form). Alternatively, the web address stored in the beacon 14 can be in other forms (e.g., WML form). In addition, the beacon 14 can store more information than just the web address.

The beacon 14 broadcasts or transmits the web address in accordance with a predetermined open standard communication protocol. The beacon 14 can be implemented by any known beacon that broadcasts or transmits signals (referred to as beacon signal). In one embodiment, the beacon 14 constantly transmits the beacon signal. In another embodiment, the beacon 14 periodically transmits the beacon signal. Alternatively, the beacon 14 transmits the beacon signal whenever activated by external stimulus.

If the beacon 14 is equipped with a wireless transmission capability, the beacon 14 can have a short or long transmission range. In one embodiment, the beacon is a short range beacon. In this case, the transmission range of the beacon 14 can be approximately three to six feet. In another embodiment, the beacon 14 is a long range beacon.

The transmission range of the beacon 14 is determined by the physical network communication technology adopted by the beacon 14. In one embodiment, the network communication technology employed by the beacon 14 can be a short range wireless technology such as infrared (e.g., the IrDA technology developed by several companies including Hewlett-Packard Company of Palo Alto, California), ultra-sound, or the low power, high frequency, short-range radio (2.4 - 5 Ghz) transmission (e.g., the Bluetooth technology developed by several telecommunications and electronics companies).

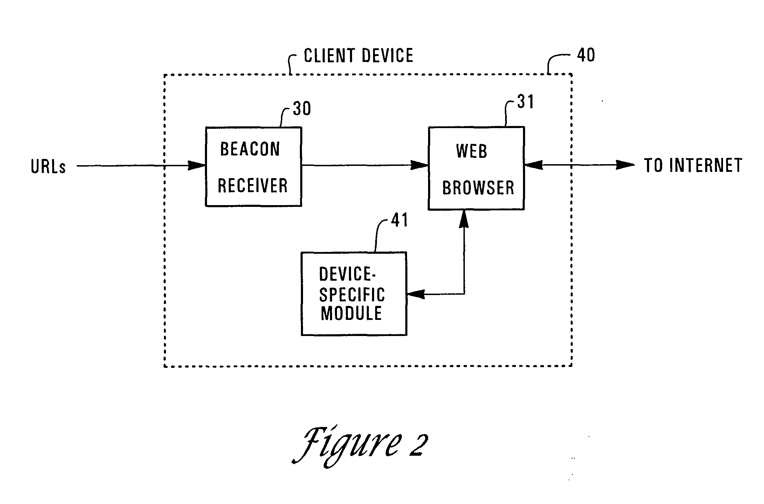

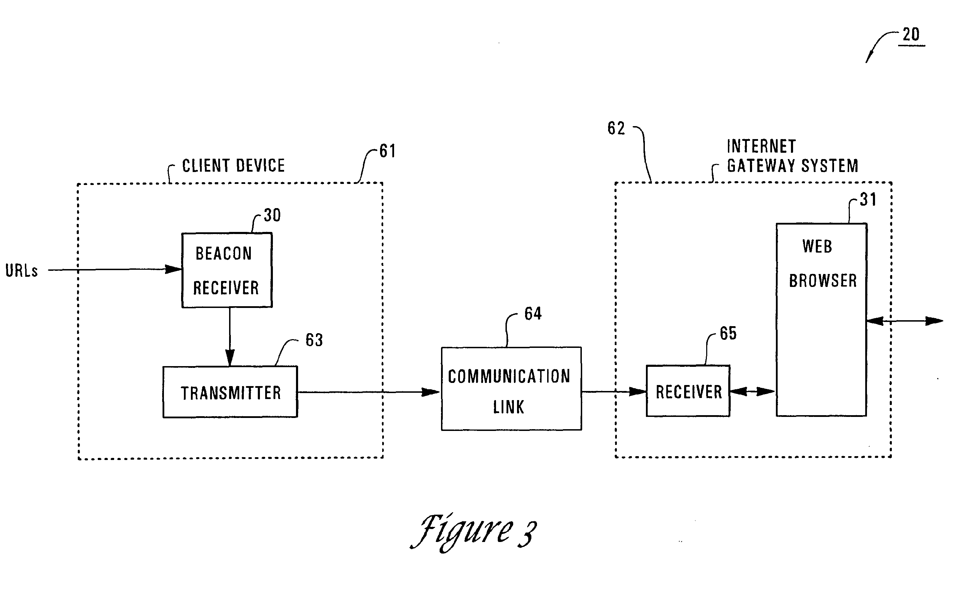

The web navigation system 10 also includes a client system 20 that contains a beacon receiver 30 to receive the transmitted web address from the beacon 14. In addition, the client system 20 also includes a web browser 31 that accesses the web page 12 via the Internet 17 using the web address received by the beacon receiver 30. There are many embodiments of the client system 20 and Figures 2 and 3 show two embodiments of the client system 20, which will be described in more detail below. However, no matter how the client system 20 is implemented, it always has the beacon receiver 30 and the web browser 31.

Referring again to Figure 1, the client system 20 receives the web address from the beacon 14 via a local network 15. The local network 15 depends on the physical network communication technology adopted by the beacon 14. When the beacon 14 employs a short range wireless transmission technology such as infrared (e.g., IrDA) or short-range radio frequency (e.g., Bluetooth), the local network 15 is just the atmosphere. When the beacon 14 transmits the web address through wire communication, then the local network 15 is needed to connect the client system 20 to the beacon 14. The local network 15 can be any known local network (e.g., the telephone network).

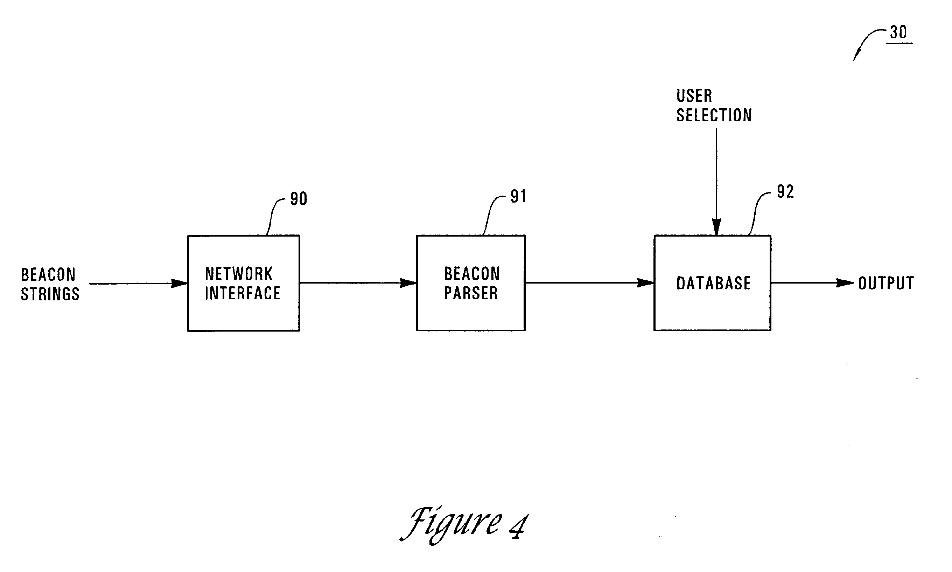

The client system 20 includes the beacon receiver 30 and the web browser 31. At a minimum, the web browser 31 is a software that is able to support a HTTP transaction across the Internet 17. The beacon receiver 30 receives the beacon signal or beacon string from the beacon 14 via the local network 15. The structure and operation of the beacon receiver 30 is shown in Figure 4, which will be described in more detail below.

During operation, because the beacon 14 is placed adjacent to the physical entity 11 and a least the beacon receiver 30 of the client system 20 is mobile (i.e., portable), the client system 20 can receive the web address of the web page 12 when the user holding the mobile part of the client system 20 approaches (or enters into) the physical entity 11. This means that the client system 20 will be within the transmitting range of the beacon 14 (if the beacon 14 employs wireless communication means). When the client system 20 is within the transmitting range of the beacon 14 (or when the client system 20 is connected to the local network 15), the web address of the web page 12 for the physical entity 11 is passed onto and received by the beacon receiver 30 in the client system 20. The web address is then passed onto the web browser 31 to access the web page 12 via the Internet 17. This provides a dynamic, interactive, and easy-to-locate web representation for the physical entity 11. This also allows for easy, convenient, and direct access to the web page 12 without the need either to search the Web to find the web page 12, or to remember the web address of the web page 12 beforehand.

Figure 2 shows one embodiment of the client system 20 of Figure 1. In Figure 2, the client system 20 is implemented as an integrated client device 40 that includes the device-specific module 41, the beacon receiver 30, and the web browser 31. In this case, the beacon receiver 30 and the web browser 31 can be one integrated application program, or connected through an application programming interface (API). All of the modules 30-31 and 41 reside within the client device 40.

The client device 40 is a portable or mobile electronic device with wired or wireless Internet access. In one embodiment, the client device 40 is a pager or a watch. In another embodiment, the client device 40 is a cellular phone or satellite phone. In a further embodiment, the client device is a palm-top computer or personal organizer (e.g., the Jornada personal organizer available from Hewlett-Packard Company of Palo Alto, California), or a mobile computer. Alternatively, the client device 40 can be any kind of information appliance, or any kind of small portable handheld electronic device or appliance which may have limited processing, storage, and display resources.

Figure 3 shows another embodiment of the client system 20 of Figure 1. In Figure 3, the client system 20 is implemented as a client device 61 and an Internet gateway system 62 connected via a communication link 64. The beacon receiver 30 is located in the client device 61 and the web browser 31 is located in the Internet gateway system 62. In this embodiment, the client device 61 is a portable or mobile handheld electronic device without the Internet access function while the Internet gateway system 62 can be a stationary system that provides the Internet access function. The Internet gateway system 62 can also be a portable system.

Similar to the client device 40 in Figure 2, the client device 61 of Figure 3 can be any portable or mobile electronic device with wire or wireless communication capability, but without any Internet access function. The client device 40 can be a pager, a watch, a cellular/satellite phone, or a palm-top computer or personal organizer (e.g., the Jornada personal organizer available from Hewlett-Packard Company of Palo Alto, California), or a mobile computer. Alternatively, the client device 61 can be any kind of information appliance, or any kind of small portable handheld electronic device or appliance that may have limited processing, storage, and display resources.

As can be seen from Figure 3, the client device 61 also includes a transmitter 63 that transmits the web address received by the beacon receiver 30 to the communication link 64. Within the Internet gateway system 62, a receiver 65 is used to receive the web address transmitted from the transmitter 63 of the client device 61. A simple but open standard communication protocol can be used for the communication between the client device 61 and the Internet gateway system 62 via the communication link 64. Both the transmitter 63 and receiver 65 can be implemented using known technology employed to communicate. The communication can use such means as radio, infrared, laser, or other type of wireless or wired communication means.

Figure 4 shows the structure of the beacon receiver 30 of Figure 1. As can be seen from Figure 4, the beacon receiver 30 includes a network interface 90, a beacon parser 91, and a database 92. Each of the above-mentioned modules 90-92 can be implemented using known technology. The network interface 90 receives the beacon string (i.e., the beacon signals that contain the web address) from the beacon 14. The structure and operation of the network interface 90 depend on the communication technology used by the beacon 14. If the beacon 14 uses the radio frequency technology (e.g., Bluetooth) to transmit the beacon string, then the network interface 90 is set to receive radio frequency signals. If the beacon 14 uses infrared transmission technology, then the network interface 90 is an infrared network interface.

The network interface 90 also includes a context manager (not shown). The context manager can be an application that collects the beacon strings that are being received by the beacon receiver 30. This context manager will simply bookmark a beacon string for as long as the beacon receiver 30 receives the beacon signals for this beacon string. When the beacon is no longer heard by the beacon receiver 30, its beacon string can be removed from the list based on application use policy.

The beacon parser 91 is used to separate different data from the beacon string received from the beacon 14 via the local network 15. As is described above, the beacon string may include more than just the web address information. It may include information regarding whether the web address is presented in the hypertext form, and if so, the user name of the hypertext. In one word, the beacon parser 91 separates the beacon string into different data fields.

The database 92 is used to store information that can be accessed by various data items received and separated from the beacon string. The user selection input to the database 92 allows the database 92 to selective output the accessed information according to the user selection. Alternatively, the beacon receiver 30 does not have the database 92.

In the foregoing specification, the invention has been described with reference to specific embodiments thereof. It will, however, be evident to those skilled in the art that various modifications and changes may be made thereto without departing from the broader spirit and scope of the invention. The specification and drawings are, accordingly, to be regarded in an illustrative rather than a restrictive sense.

## Claims

1. A web navigation system, comprising:
a beacon that stores a web address of a particular web page that contains information about a physical object located adjacent to the beacon, wherein the beacon transmits beacon signals containing the web address;
a beacon receiver physically separated from the beacon to receive, when within transmission range of the beacon, the beacon signals and to decode the web address from the beacon signals;
a web access module coupled to the beacon receiver and external Internet to access the web page using the web address.

2. The web navigation system of claim 1, wherein the beacon periodically transmits the signals containing the web address.

3. The web navigation system of claim 1, wherein the beacon constantly transmits the signals containing the web address.

4. The web navigation system of claim 1, wherein the beacon transmits the signals containing the web address only when activated by external stimulus.

5. The web navigation system of claim 1, wherein the beacon receiver and the web access module are separate modules located within the same physical system.

6. The web navigation system of claim 1, wherein the beacon receiver and the web access module are two separate modules located in two separate physical systems.

7. The web navigation system of claim 1, wherein the web access module is coupled to the beacon receiver through an application programming interface.

8. The web navigation system of claim 1, further comprising
a transmitter coupled to the beacon receiver and located in a single physical client device system that contains the beacon receiver;
a receiver coupled to the web access module and located in a single physical Internet gateway system that contains the web access module, wherein the transmitter sends the web address received from the beacon receiver via a communication link to the receiver.

9. The web navigation system of claim 1, wherein the beacon receiver further comprises
a network interface that enables reception of the beacon signals from the beacon;
a beacon parser that decodes the beacon signals to obtain the web address;
a beacon database that stores the decoded web address and other information decoded from the beacon signals.

10. A system for associating a web page to a physical entity, comprising:
a beacon that stores a web address of the web page which contains information about the physical entity, wherein the beacon is located adjacent to the physical entity and transmits beacon signals containing the web address;
a client system physically separated from the beacon and further comprising
a beacon receiver that receives, when within transmission range of the beacon, the beacon signals and decodes the web address from the beacon signals;
a web access module coupled to the beacon receiver and external Internet to access the web page using the web address such that when the physical entity attracts attention, the associated web page is quickly and automatically located without the need for user browsing.

11. The system of claim 10, wherein the beacon periodically transmits the signals containing the web address.

12. The system of claim 10, wherein the beacon constantly transmits the signals containing the web address.

13. The system of claim 10, wherein the beacon transmits the signals containing the web address only when activated by external stimulus.

14. The system of claim 10, wherein the client system is a single physical system and the beacon receiver and the web access module are physically within the client system.

15. The system of claim 10, wherein the client system further comprises a receiver system and an Internet gateway system coupled together via a communication link, wherein the beacon receiver is located in the receiver system and the web access module is located in the Internet gateway system.

16. The system of claim 15, wherein the receiver system further comprises a transmitter coupled to the beacon receiver to send the web address received from the beacon receiver via a communication link to the Internet gateway system.

17. The system of claim 15, wherein the Internet gateway system further comprises a receiver coupled to the web access module to receive the web address from the transmitter via the communication link.

18. The system of claim 10, wherein the beacon receiver further comprises
a network interface that enables reception of the beacon signals from the beacon;
a beacon parser that decodes the beacon signals to obtain the web address;
a beacon database that stores the decoded web address and other information decoded from the beacon signals.
